# EUROPÄISCHE PATENTSCHRIFT

(11) **EP 4 151 889 B1**
(45) Veröffentlichungstag und Bekanntmachung des Hinweises auf die Patenterteilung: **14.08.2024**
(21) Anmeldenummer: 22190888.2
(22) Anmeldetag: 18.08.2022
(51) Int. Cl.: E01C 19/26, F16H 61/4104, F16H 61/4165, F16H 61/4139, F16H 61/4148

(54) **BODENBEARBEITUNGSMASCHINE UND VERFAHREN ZUM BETREIBEN EINER BODENBEARBEITUNGSMASCHINE**
GROUND WORKING MACHINE AND METHOD FOR OPERATING A GROUND WORKING MACHINE
MACHINE DE TRAVAIL DU SOL ET PROCÉDÉ DE FONCTIONNEMENT D'UNE MACHINE DE TRAVAIL DU SOL

(30) Priorität: 20.09.2021 DE 102021124183
(43) Veröffentlichungstag der Anmeldung: 22.03.2023
(73) Patentinhaber: Hamm AG, 95643 Tirschenreuth (DE)
(72) Erfinder: Klein, Thomas, Mitterteich (DE); Pieske, Ronny, Zwönitz (DE)
(74) Vertreter: Ruttensperger Lachnit Trossin Gomoll

(56) Entgegenhaltungen:
- DE-A1- 102007 032 005
- DE-A1- 102017 215 726
- DE-A1- 102018 208 352
- US-A1- 2014 150 880
- US-B2- 7 111 458

## Beschreibung

Die vorliegende Erfindung betrifft eine Bodenbearbeitungsmaschine, wie zum Beispiel einen Bodenverdichter, der dazu eingesetzt werden kann, das Aufbaumaterial eines Untergrunds, wie zum Beispiel Asphalt, Erdreich oder Schotter, zu verdichten. Ferner betrifft die vorliegende Erfindung ein Verfahren zum Betreiben einer derartigen Bodenbearbeitungsmaschine.

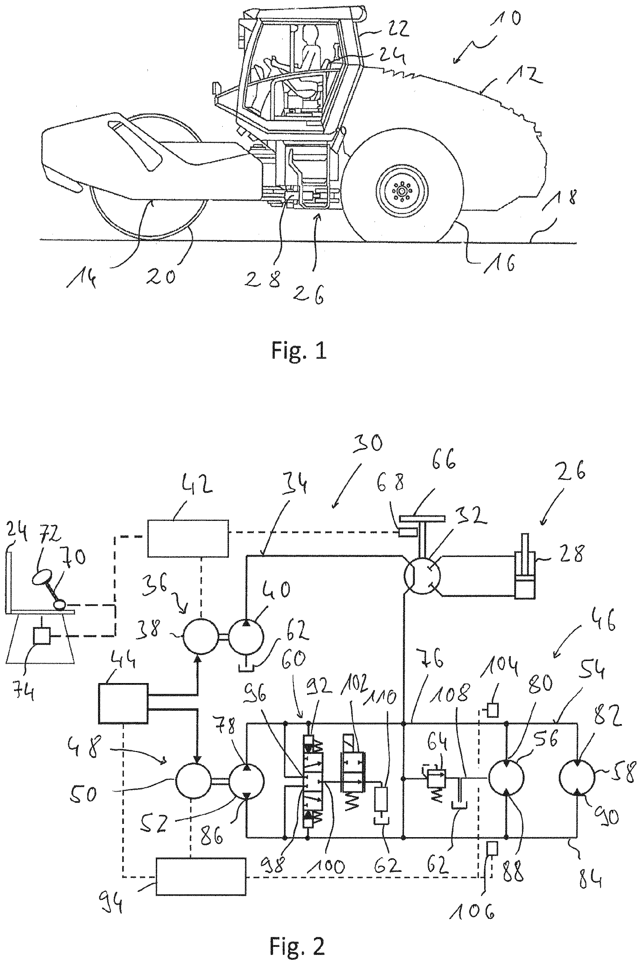

Ein Beispiel einer derartigen als Bodenverdichter ausgebildeten Bodenbearbeitungsmaschine ist in Fig. 1 dargestellt. Diese als Bodenverdichter ausgebildete Bodenbearbeitungsmaschine 10 ist mit einem Hinterwagen 12 und einem mit dem Hinterwagen 12 um eine näherungsweise vertikale Lenkachse schwenkbar verbundenen Vorderwagen 14 aufgebaut. Am Hinterwagen 12 sind Antriebsräder 16 vorgesehen, welche zum Bewegen des Bodenverdichters 10 auf dem zu verdichtenden Untergrund 18 zur Drehung antreibbar sind. Am Vorderwagen 14 ist eine als Verdichterwalze ausgebildete Bodenbearbeitungswalze 18 drehbar getragen. Bei dem in Fig. 1 dargestellten Aufbau eines Bodenverdichters ist die Bodenbearbeitungswalze 18 selbst im Allgemeinen nicht zur Drehung angetrieben, sondern rollt, angetrieben durch die Antriebsräder 16, über den Untergrund 18. Beispielsweise bei einem Bodenverdichter, bei welchem auch am Hinterwagen 12 eine Verdichterwalze vorgesehen ist, könnte eine oder könnten beide Verdichterwalzen zur Drehung angetrieben sein, um den Bodenverdichter über den Untergrund 18 zu bewegen.

Am Hinterwagen 12 ist ferner ein Bedienstand 22 vorgesehen, in welchem eine Bedienperson auf einen Bedienpersonsitz 24 Platz nehmen kann, um den Bodenverdichter zu bedienen. Im Bedienstand 22 sind ferner verschiedene, nachfolgend noch erläuterte Betätigungsorgane vorgesehen, über welche eine im Bedienstand 22 auf dem Bedienpersonsitz 24 Platz nehmende Bedienperson den Bodenverdichter bedienen kann.

Im Allgemeinen weisen derartige Bodenverdichter am Hinterwagen 12 ein als DieselBrennkraftmaschine ausgebildetes Antriebsaggregat auf. Das Antriebsaggregat treibt eine bzw. mehrere Hydraulikpumpen an, um in verschiedenen Hydraulikkreisläufen Druckfluid bereitzustellen. So kann beispielsweis ein Fahr-Hydraulikkreislauf vorgesehen sein, über welchen den Antriebsrädern 16 zugeordnete Hydraulikmotoren mit Druckfluid gespeist werden können, um den Bodenverdichter über den Untergrund 18 zu bewegen. Weist ein derartiger Bodenverdichter eine oder mehrere zur Drehung angetriebene Verdichterwalzen bzw. Bodenbearbeitungswalzen 20 auf, können auch diesen Hydraulikmotoren zugeordnet sein, um diese zur Drehung anzutreiben. Ein weiterer Hydraulikkreislauf kann dazu dienen, ein Unwuchtsystem in der Bodenbearbeitungswalze 20 anzutreiben. Auch ein derartiges Unwuchtsystem, welches dazu ausgebildet sein kann, eine Oszillationsbewegung oder/und eine Vibrationsbewegung der Bodenbearbeitungswalze 20 zu erzeugen, kann einen oder mehrere Hydraulikmotoren umfassen, um Unwuchtmassen zur Drehung anzutreiben. Ein weiterer Hydraulikkreislauf kann einem Lenksystem zugeordnet sein. Das in einem derartigen Lenk-Hydraulikkreislauf vorhandene Druckfluid kann über ein Hydraulik-Lenkaggregat abhängig von einer Lenkbewegung eines Lenk-Betätigungsorgans, beispielsweise eines Lenkrads, Hydraulikfluid zu einer bzw. zu zwei als Lenkorgane 26 wirksamen Lenk-Kolben/Zylinder-Einheiten 28 leiten. Durch derartige Lenk-Kolben/Zylinder-Einheiten 28 werden der Vorderwagen 14 und der Hinterwagen 12 bezüglich einander um die Lenkachse verschwenkt, wodurch der Bodenverdichter bei seiner Bewegung über den Untergrund 18 gelenkt wird.

Aus der DE 10 2017 215 726 A1 ist eine Bodenbearbeitungsmaschine gemäß dem Oberbegriff des Anspruchs 1 bekannt, bei welcher abhängig von der Temperatur eines Hydraulikfluids in einem Fahr-Hydraulikkreislauf die Ausspeisung von Fluid aus dem Fahr-Hydraulikkreislauf freigegeben oder unterbunden wird. Ist die Ausspeisung von Fluid aufgrund einer ausreichend hohen Temperatur des Hydraulikfluids freigegeben, wird die Menge des ausgespeisten Hydraulikfluids abhängig von dem im Fahr-Hydraulikkreislauf vorherrschenden Fluiddruck bestimmt.

Die DE 10 2018 208 352 A1 offenbart einen Hydraulikkreislauf, bei welchem dann, wenn die Temperatur des Hydraulikfluids ausreichend hoch ist, abhängig vom Fluiddruck Fluid zu einem Tank ausgespeist wird. Beim Ausspeisen des Fluids werden in diesem enthaltene Schmutzpartikel in den Tank ausgespült.

Die DE 10 2007 032 005 offenbart eine Bodenbearbeitungsmaschine mit einem durch einen Dieselmotor angetriebenen Fahr-Hydraulikkreislauf.

Die US 2014/150880 A1 offenbart einen Fahr-Hydraulikkreislauf, bei welchem eine Ausspeisung von Fluid dann stattfindet, wenn der Druck des Fluids in dem Fahr-Hydraulikkreislauf über einem vorbestimmten Wert liegt und die Temperatur des Fluids über einem vorbestimmten Wert legt.

Aus der US 7 111 458 B2 ist ein Hydrauliksystem bekannt, bei welchem Betriebsparameter, wie zum Beispiel die Temperatur des Hydraulikfluids in einem Hydraulikkreislauf, der Druck des Hydraulikfluids, die Temperatur in einem Gehäuse einer Hydraulikeinheit, eine Lagertemperatur oder eine Verunreinigung des Hydraulikfluids erfasst werden. Auf der Grundlage von einem oder mehreren dieser Parameter wird ein Ventil zum Ausspeisen von Fluid aus dem Hydraulikkreislauf betätigt.

Es ist die Aufgabe der vorliegenden Erfindung, eine Bodenbearbeitungsmaschine und ein Verfahren zum Betreiben einer Bodenbearbeitungsmaschine bereitzustellen, mit welchen ein effizienter, energiesparender Betrieb eines hydraulischen Fahrantriebssystems erreicht wird.

Erfindungsgemäß wird diese Aufgabe gelöst durch eine Bodenbearbeitungsmaschine, insbesondere Bodenverdichter, gemäß Anspruch 1. Diese umfasst ein hydraulisches Fahrantriebssystem, wobei das hydraulische Fahrantriebssystem umfasst:
- eine elektrohydraulische Druckfluidquelle mit wenigstens einem Elektromotor und wenigstens einer Fahr-Hydraulikpumpe,
- einen durch die wenigstens eine Fahr-Hydraulikpumpe mit Druckfluid gespeisten Fahr-Hydraulikkreislauf,
- wenigstens einen aus dem Fahr-Hydraulikkreislauf mit Druckfluid gespeisten Fahr-Hydraulikmotor,
- eine Ausspeiseventilanordnung zur Abgabe von Fluid aus dem Fahr-Hydraulikkreislauf in ein Fluidreservoir,
- eine Ansteuereinheit zum Ansteuern der Ausspeiseventilanordnung,
wobei das hydraulische Fahrantriebssystem dazu ausgebildet ist, die Ausspeiseventilanordnung in Abhängigkeit von wenigstens einem der folgenden Parameter zur Abgabe von Fluid zu dem Fluidreservoir zu betreiben:
- eine Temperatur des Fluids im Fahr-Hydraulikkreislauf,
- eine Temperatur des Fluids in einem Fluidrücklauf zum Fluidreservoir,
- eine Umgebungstemperatur,
- eine Viskosität des Fluids im Fahr-Hydraulikkreislauf,
- ein Verschmutzungsgrad des Fluids im Fahr-Hydraulikkreislauf
- eine Zeitdauer seit der letzten Inbetriebnahme des hydraulischen Fahrantriebssystems,
- eine Zeitdauer seit der letzten Fluidausspeisung aus dem Fahr-Hydraulikkreislauf.

Durch das Ausspeisen von Fluid aus dem Fahr-Hydraulikkreislauf des hydraulischen Fahrantriebssystems wird es möglich, eine derartige Ausspeisung tatsächlich nur dann vorzunehmen, wenn dies erforderlich ist bzw. zu einer Steigerung der Effizienz bzw. des Wirkungsgrads des Fahr-Hydraulikkreislaufs führt. Somit kann die über den wenigstens einen Elektromotor der elektrohydraulischen Druckfluidquelle in den Fahr-Hydraulikkreislauf eingeleitete Energie effizient genutzt werden.

Um bei dem Fahr-Hydraulikkreislauf den wenigstens einen Fahr-Hydraulikmotor in unterschiedlichen Drehrichtungen betreiben zu können, wird vorgeschlagen, dass der Fahr-Hydraulikkreislauf eine erste Verbindungsleitung zwischen einem ersten Verbindungsanschluss der wenigstens einen Fahr-Hydraulikpumpe und einem ersten Verbindungsanschluss des wenigstens einen Fahr-Hydraulikmotors zum Fördern von Druckfluid von dem ersten Verbindungsanschluss der wenigstens einen Fahr-Hydraulikpumpe zu dem ersten Verbindungsanschluss des wenigstens einen Fahr-Hydraulikmotors zum Betreiben des wenigstens einen Fahr-Hydraulikmotors in einer ersten Drehrichtung und eine zweite Verbindungsleitung zwischen einem zweiten Verbindungsanschluss der wenigstens einen Fahr-Hydraulikpumpe und einem zweiten Verbindungsanschluss des wenigstens einen Fahr-Hydraulikmotors zum Fördern von Druckfluid von dem zweiten Verbindungsanschluss der wenigstens einen Fahr-Hydraulikpumpe zu dem zweiten Verbindungsanschluss des wenigstens einen Fahr-Hydraulikmotors zum Betreiben des wenigstens einen Fahr Hydraulikmotors in einer zweiten Drehrichtung umfasst.

Erfolgt das Ausspeisen während des Fahrbetriebs, ist es besonders vorteilhaft, wenn das hydraulische Fahrantriebssystem dazu ausgebildet ist, die Ausspeiseventilanordnung zum Ausspeisen von Fluid aus der zweiten Verbindungsleitung zu betreiben, wenn der wenigstens eine Fahr-Hydraulikmotor über die erste Verbindungsleitung mit Druckfluid gespeist wird, oder/und wenn das hydraulische Fahrantriebssystem dazu ausgebildet ist, die Ausspeiseventilanordnung zum Ausspeisen von Fluid aus der ersten Verbindungsleitung zu betreiben, wenn der wenigstens eine Fahr-Hydraulikmotor über die zweite Verbindungsleitung mit Druckfluid gespeist wird. Somit ist gewährleistet, dass das Ausspeisen von Fluid nicht die Zufuhr von Druckfluid zu dem wenigstens einen Fahr-Hydraulikmotor beeinträchtigt.

Die Ausspeiseventilanordnung kann ein Umschaltventil mit einem an die erste Verbindungsleitung angeschlossenen ersten Eingangsanschluss, einem an die zweite Verbindungsleitung angeschlossenen zweiten Eingangsanschluss und einem an das Fluidreservoir angeschlossenen Ausgangsanschluss umfassen, wobei in einer ersten Ventilstellung des Umschaltventils eine Verbindung zwischen dem ersten Eingangsanschluss und dem Ausgangsanschluss besteht und keine Verbindung zwischen dem zweiten Eingangsanschluss und dem Ausgangsanschluss besteht und in einer zweiten Ventilstellung des Umschaltventils eine Verbindung zwischen dem zweiten Eingangsanschluss und dem Ausgangsanschluss besteht und keine Verbindung zwischen dem ersten Eingangsanschluss und dem Ausgangsanschluss besteht. Somit ist es möglich, aus jeder der Verbindungsleitungen Fluid zum Fluidreservoir abzugeben.

Insbesondere wenn das Umschaltventil primär dazu vorgesehen ist, eine Verbindung zwischen dem Fluidreservoir und einer der Verbindungsleitungen bereitzustellen, kann zur definierten Einstellung der Menge des ausgespeisten Fluids der Ausgangsanschluss des Umschaltventils über ein Absperrventil an das Fluidreservoir angeschlossen sein, wobei in einer Offenstellung des Absperrventils eine Verbindung zwischen dem Ausgangsanschluss und dem Fluidreservoir besteht und in einer Sperrstellung des Absperrventils keine Verbindung zwischen dem Ausgangsanschluss und dem Fluidreservoir besteht.

Für eine geeignete Berücksichtigung der Temperatur des Fluids wird vorgeschlagen, dass das hydraulische Fahrantriebssystem dazu ausgebildet ist, die Ausspeiseventilanordnung zur Abgabe von Fluid zu dem Fluidreservoir in Abhängigkeit von der Temperatur des Fluids in der ersten Verbindungsleitung zu betreiben, wenn der wenigstens ein Fahr-Hydraulikmotor über die erste Verbindungsleitung mit Druckfluid gespeist wird, und die Ausspeiseventilanordnung zur Abgabe von Fluid zu dem Fluidreservoir in Abhängigkeit von der Temperatur des Fluids in der zweiten Verbindungsleitung zu betreiben, wenn der wenigstens ein Fahr-Hydraulikmotor über die zweite Verbindungsleitung mit Druckfluid gespeist wird.

Das hydraulische Fahrantriebssystem ist dazu ausgebildet, die Ausspeiseventilanordnung zur Abgabe von Fluid zu dem Fluidreservoir zu betreiben, wenn die Temperatur des Fluids im Fahr-Hydraulikkreislauf über einer vorbestimmten Ausspeise-Fluidschwellentemperatur oder in einem vorbestimmten Ausspeise-Fluidtemperaturbereich liegt. Somit ist gewährleistet, dass das Fluid zunächst auf eine geeignete Temperatur gebracht wird und erst dann, wenn dies der Fall ist, Fluid ausgespeist und durch anderes, im Allgemeinen kälteres Fluid beispielsweise aus dem Fluidreservoir ersetzt wird.

Dabei ist weiter vorgesehen, dass bei Betreiben der Ausspeiseventilanordnung zur Abgabe von Fluid aus dem Fahr-Hydraulikkreislauf zu dem Fluidreservoir die Menge des zu dem Fluidreservoir abgegebenen Fluids oder/und die Fluidabgaberate in Abhängigkeit von der Umgebungstemperatur oder/und dem Verschmutzungsgrad oder/und der seit der letzten Inbetriebnahme des hydraulischen Fahrantriebssystems vergangenen Zeit oder/und der seit der letzten Fluidausspeisung aus dem Fahr-Hydraulikkreislauf vergangenen Zeit eingestellt wird. Es wird somit eine noch exaktere Berücksichtigung von den Betriebszustand des hydraulischen Fahrantriebssystems beeinflussenden Parametern ermöglicht.

Weiter kann das hydraulische Fahrantriebssystem dazu ausgebildet sein, die Ausspeiseventilanordnung zur Abgabe von Fluid zu dem Fluidreservoir zu betreiben, wenn die Temperatur des Fluids in einer zu dem Fluidreservoir führenden Leckageleitung über einer vorbestimmten Ausspeise-Fluidschwellentemperatur oder/und in einem vorbestimmten Ausspeise-Fluidtemperaturbereich liegt. Eine derartige beispielsweise Fluidleckagen aus einem oder mehreren Fahr-Hydraulikmotoren in das Fluidreservoir leitende Leckageleitung bzw. ein Fluidkühler, welchen zu dem Fluidreservoir zurückgeführtes Fluid durchströmt, bilden Systembereiche eines Fluidrücklaufs. Auch die darin vorhandene Fluidtemperatur kann als Indikator für das Auslösen eines Ausspeisevorgangs genutzt werden.

Zusätzlich zur Berücksichtigung der Temperatur des Fluids im Fahr-Hydraulikkreislauf kann das hydraulische Fahrantriebssystem dazu ausgebildet sein, die Ausspeiseventilanordnung zur Abgabe von Fluid zu dem Fluidreservoir zu betreiben, wenn die Umgebungstemperatur über einer vorbestimmten Ausspeise-Umgebungsschwellentemperatur oder/und in einem vorbestimmten Ausspeise-Umgebungstemperaturbereich liegt. Eine niedrige Umgebungstemperatur bedeutet im Allgemeinen, dass auch das Fluid im Fahr-Hydraulikkreislauf eine niedrige Temperatur aufweist bzw. schneller abkühlt, so dass auch durch Berücksichtigung der Umgebungstemperatur eine Ausspeisung, die zu einem geringeren Wirkungsgrad führen würde, vermieden werden kann.

Weiter kann das hydraulische Fahrantriebssystem dazu ausgebildet sein, die Ausspeiseventilanordnung zur Abgabe von Fluid zu dem Fluidreservoir zu betreiben, wenn die Viskosität des Fluids in dem Fahr-Hydraulikkreislauf unter einer vorbestimmten Schwellenviskosität oder/und in einem vorbestimmten Viskositätsbereich liegt. Die Viskosität des Fluids im Fahr-Hydraulikkreislauf kann beispielsweise durch den Druckabfall zwischen zwei Druckmesspunkten im Fahr-Hydraulikkreislauf ermittelt werden und stellt einen Parameter dar, welcher unmittelbar verknüpft ist mit der Temperatur des Fluids. Auch unter Berücksichtigung der Viskosität des Fluids kann dafür gesorgt werden, dass kein Fluid ausgespeist wird oder beispielsweise nur eine geringere Menge des Fluids ausgespeist wird, solange die Viskosität zu hoch ist, also das Fluid vergleichsweise zähflüssig ist. Erst dann, wenn nach ausreichender Betriebsdauer die Viskosität gesunken ist, wird gemäß diesem Aspekt der vorliegenden Erfindung Fluid ausgespeist, um die Viskosität in einem für einen effizienten Energieeinsatz optimalen Wertebereich halten zu können.

Gemäß einem weiteren Ausgestaltungsaspekt kann vorgesehen sein, dass das hydraulische Fahrantriebssystem dazu ausgebildet ist, die Ausspeiseventilanordnung zur Abgabe von Fluid zu dem Fluidreservoir zu betreiben, wenn der Verschmutzungsgrad des Fluids in dem Fahr-Hydraulikkreislauf über einem vorbestimmten Ausspeise-Schwellenverschmutzungsgrad oder/und in einem vorbestimmten Verschmutzungsgradbereich liegt. Der Verschmutzungsgrad des Fluid kann beispielsweise durch optische Detektoren in Transmission oder Absorption erfasst werden. Wird erkannt, dass in dem im Fahr-Hydraulikkreislauf zirkulierenden Fluid ein zu hoher Anteil an Verunreinigungspartikeln enthalten ist, kann ein Teil dieses Fluids ausgespeist werden und dabei beispielsweise beim Strömen zu dem Fluidreservoir durch einen Partikelfilter hindurch geleitet werden, um dieses zu reinigen. Alternativ oder zusätzlich kann in den Fahr-Hydraulikkreislauf neu eingespeistes Fluid beim Ableiten aus dem Fluidreservoir einer Filterung unterzogen werden.

Gemäß einem weiteren Erfindungsaspekt kann das hydraulische Fahrantriebssystem dazu ausgebildet sein, die Ausspeiseventilanordnung zur Abgabe von Fluid zu dem Fluidreservoir zu betreiben, wenn seit der letzten Inbetriebnahme des hydraulischen Fahrantriebssystems eine vorbestimmte Zeit vergangen ist, oder/und wenn seit der letzten Fluidausspeisung aus dem Fahr-Hydraulikkreislauf eine vorbestimmte Zeit vergangen ist.

Um dafür Sorge zu tragen, dass auch bei bzw. nach dem Ausspeisen von Fluid aus dem Fahr-Hydraulikkreislauf in diesem ausreichend Fluid zur Verfügung steht, wird vorgeschlagen, dass ein Lenk-Hydraulikkreislauf vorgesehen ist, und dass der Lenk-Hydraulikkreislauf dazu ausgebildet ist, Fluid in den Fahr-Hydraulikkreislauf nachzuspeisen.

Die eingangs angegebene Aufgabe wird weiter gelöst durch ein Verfahren zum Betreiben einer Bodenbearbeitungsmaschine, umfassend ein hydraulisches Fahrantriebssystem, wobei das hydraulische Fahrantriebssystem umfasst:
- eine elektrohydraulische Druckfluidquelle mit wenigstens einem Elektromotor und wenigstens einer Fahr-Hydraulikpumpe,
- einen durch die wenigstens eine Fahr-Hydraulikpumpe mit Druckfluid gespeisten Fahr-Hydraulikkreislauf,
- wenigstens einen aus dem Fahr-Hydraulikkreislauf mit Druckfluid gespeisten Fahr-Hydraulikmotor,
- eine Ausspeiseventilanordnung zur Abgabe von Fluid aus dem Fahr-Hydraulikkreislauf in ein Fluidreservoir,
- eine Ansteuereinheit zum Ansteuern der Ausspeiseventilanordnung,
wobei die Ausspeiseventilanordnung in Abhängigkeit von wenigstens einem der folgenden Parameter zur Abgabe von Fluid zu dem Fluidreservoir betrieben wird:
- eine Temperatur des Fluids im Fahr-Hydraulikkreislauf,
- eine Temperatur des Fluids in einem Fluidrücklauf zum Fluidreservoir,
- eine Umgebungstemperatur,
- eine Viskosität des Fluids im Fahr-Hydraulikkreislauf,
- ein Verschmutzungsgrad des Fluids im Fahr-Hydraulikkreislauf
- eine Zeitdauer seit der letzten Inbetriebnahme des hydraulischen Fahrantriebssystems,
- eine Zeitdauer seit der letzten Fluidausspeisung aus dem Fahr-Hydraulikkreislauf.

Die Ausspeiseventilanordnung wird zur Abgabe von Fluid zu dem Fluidreservoir betrieben, wenn die Temperatur des Fluids im Fahr-Hydraulikkreislauf über einer vorbestimmten Ausspeise-Fluidschwellentemperatur oder in einem vorbestimmten Ausspeise-Fluidtemperaturbereich liegt.

Bei Betreiben der Ausspeiseventilanordnung zur Abgabe von Fluid aus dem Fahr-Hydraulikkreislauf zu dem Fluidreservoir wird die Menge des zu dem Fluidreservoir abgegebenen Fluids oder/und die Fluidabgaberate in Abhängigkeit von der Umgebungstemperatur oder/und dem Verschmutzungsgrad oder/und der seit der letzten Inbetriebnahme des hydraulischen Fahrantriebssystems vergangenen Zeit oder/und der seit der letzten Fluidausspeisung aus dem Fahr-Hydraulikkreislauf vergangenen Zeit eingestellt.

Die vorliegende Erfindung wird nachfolgend mit Bezug auf die beiliegenden Figuren detailliert beschrieben. Es zeigt:
- Fig. 1: eine Seitenansicht einer als Bodenverdichter ausgebildeten Bodenbearbeitungsmaschine;
- Fig. 2: in prinzipartiger Darstellung ein hydraulisches Lenksystem und ein hydraulisches Fahrantriebssystem einer Bodenbearbeitungsmaschine.

Bevor nachfolgend mit Bezug auf die Fig. 2 der Aufbau und die Funktion eines hydraulischen Lenksystems und eines hydraulischen Fahrantriebssystems einer Bodenbearbeitungsmaschine detailliert erläutert werden, ist darauf hinzuweisen, dass die nachfolgend mit Bezug auf die Fig. 2 beschriebenen Systeme beispielsweise bei einer als Bodenverdichter ausgebildeten Bodenbearbeitungsmaschine 10 eingesetzt werden können, wie diese in Fig. 1 dargestellt ist. Grundsätzlich ist jedoch darauf hinzuweisen, dass die nachfolgend mit Bezug auf die Fig. 2 beschriebenen Systeme auch bei anders gestalteten Bodenbearbeitungsmaschinen, beispielsweise bei Bodenbearbeitungsmaschinen, die an einem Vorderwagen und an einem Hinterwagen Bodenbearbeitungswalzen aufweisen, eingesetzt werden können.

Die Fig. 2 zeigt ein allgemein mit 30 bezeichnetes hydraulisches Lenksystem. Das hydraulische Lenksystem 30 umfasst ein oder mehrere als doppeltwirkende Lenk-Kolben/Zylinder-Einheiten 28 ausgebildete Lenkorgane 26, welche über ein Hydraulik-Lenkaggregat 32 an einen Lenk-Druckfluidkreislauf 34 angekoppelt sind. Das hydraulische Lenksystem 30 umfasst eine elektrohydraulische Druckfluidquelle 36 mit einem Elektromotor 38 und einer vom Elektromotor 38 angetriebenen Lenk-Druckfluidpumpe 40. Der Elektromotor 38 des hydraulischen Lenksystems 30 steht unter der Ansteuerung einer Ansteuereinheit 42 und wird zum Antreiben der Lenk-Druckfluidpumpe 40 aus einer Spannungsquelle, beispielsweise einer Batterie 44, gespeist. Das Anlegen einer elektrischen Spannung an den Elektromotor 38 aus der Batterie 44 kann gemäß entsprechenden Ansteuervorgaben aus der Ansteuereinheit 42 erfolgen.

Die Fig. 2 zeigt weiter ein allgemein mit 46 bezeichnetes hydraulisches Fahrantriebssystem. Das hydraulische Fahrantriebssystem 46 umfasst eine hydraulische Druckfluidquelle 48 mit einem Elektromotor 50 und einer vom Elektromotor 50 angetriebenen Fahr-Hydraulikpumpe 52. Die Fahr-Hydraulikpumpe 52 fördert ein Fluid, zum Beispiel Hydrauliköl, in einem Fahr-Hydraulikkreislauf 54 und versorgt somit zwei in den Fahr-Hydraulikkreislauf 54 integrierte Fahr-Hydraulikmotoren 56, 58 mit Druckfluid. Beispielsweise können die beiden Fahr-Hydraulikmotoren 56, 58 zwei an einem Bodenverdichter vorgesehenen Bodenbearbeitungswalzen zugeordnet sein, um jede dieser Bodenbearbeitungswalzen zum Bewegen des Bodenverdichters antreiben zu können. Bei dem in Fig. 1 dargestellten Aufbau einer Bodenbearbeitungsmaschine könnte einer der beiden Fahr-Hydraulikmotoren 56, 58 einem der beiden Antriebsräder 16 zugeordnet sein, und der andere der beiden Fahr-Hydraulikmotoren 56, 58 könnte dem anderen Antriebsrad 16 zugeordnet sein.

Der Fahr-Hydraulikkreislauf 46 umfasst ferner eine Ausspeiseventilanordnung 60, über welche Fluid aus dem Fahr-Hydraulikkreislauf 46 zu einem Fluidreservoir 62 ausgespeist werden kann. Aus diesem Fluidreservoir 62 fördert die Lenk-Hydraulikpumpe 40 Fluid in den Lenk-Hydraulikkreislauf 34, welcher, wie in Fig. 2 dargestellt, mit dem Fahr-Hydraulikkreislauf 54 derart verknüpft ist, dass von der Lenk-Hydraulikpumpe 40 in den Lenk-Hydraulikkreislauf 34 als Druckfluid eingespeistes Fluid, zum Beispiel Hydrauliköl, in den Fahr-Hydraulikkreislauf 46 eingeleitet werden kann. Damit wird es beispielsweise möglich, dann, wenn über die Ausspeiseventilanordnung 60 aus dem Fahr-Hydraulikkreislauf 46 Fluid in das Fluidreservoir 62 ausgespeist wird, durch Nachspeisen von Fluid aus dem Lenk-Hydraulikkreislauf 34 die Menge des im Fahr-Hydraulikkreislauf 54 vorhanden Fluids im Wesentlichen konstant zu halten. Auch im Fahr-Hydraulikkreislauf 54 auftretende Fluidleckagen können auf diese Art und Weise kompensiert werden.

Der Lenk-Hydraulikkreislauf 34 umfasst ferner ein Rückspeiseventil 64, über welches aus dem Lenk-Hydraulikkreislauf 34 Fluid bzw. Druckfluid in das Fluidreservoir 62 zurückgespeist werden kann. Das Rückspeiseventil 64 kann beispielsweise druckgesteuert sein, so dass dann, wenn der Fluiddruck im Lenk-Hydraulikkreislauf 34 bzw. auch im Fahr-Hydraulikkreislauf 54 einen vorbestimmten Schwellendruck übersteigt, Fluid zum Fluidreservoir 62 abgegeben werden kann.

Um eine Bodenbearbeitungsmaschine, beispielsweise die in Fig. 1 dargestellte Bodenbearbeitungsmaschine 10, zu lenken, ist ein im Allgemeinen als Lenkrad ausgebildetes Lenk-Betätigungsorgan 66 vorgesehen. Eine im Bedienstand 22 Platz nehmende Bedienperson kann durch Betätigen des Lenk-Betätigungsorgans 66, also durch Drehen eines Lenkrads, die über den zu bearbeitenden Untergrund 18 sich bewegende Bodenbearbeitungsmaschine 10 lenken. Dabei wird die Lenkbewegung des Lenk-Betätigungsorgans 66 im Hydraulik-Lenkaggregat 32 umgesetzt in eine entsprechende Zufuhr von Druckfluid in eine in der Kammern jeder Lenk-Kolben/Zylinder-Einheit 28 und eine entsprechende Abgabe von Druckfluid aus der anderen der beiden Kammern jeder Lenk-Kolben/Zylinder-Einheit 28.

Die Betätigung des Lenk-Betätigungsorgans 66 wird durch einen Lenksensor 68 erfasst. Dieser kann beispielsweise die Drehbewegung einer mit dem Lenk-Betätigungsorgan 66 zur gemeinsamen Drehung gekoppelten Lenkwelle erfassen und ein den Lenkzustand repräsentierende Information beinhaltendes Signal zu der Ansteuereinheit 42 ausgeben. Diese Information kann beispielsweise eine Information über die momentane Drehposition des Lenk-Betätigungsorgans 66 bzw. der damit gekoppelten Lenkwelle sein, welche einen Lenkwinkel repräsentiert.

Im Bedienstand 22 sind weitere Organe vorgesehen, über welche eine Bedienperson eine derartige Bodenbearbeitungsmaschine 10 bedienen kann. Vermittels eines beispielsweise als Fahr-Betätigungshebel 70 ausgebildeten Fahr-Betätigungsorgans 72 kann die Bedienperson die Bodenbearbeitungsmaschine 10 in Bewegung setzen. Dies bedeutet, dass beispielsweise durch Verschwenken des Fahr-Betätigungshebels 70 der Elektromotor 50 der elektrohydraulischen Druckfluidquelle 48 des hydraulischen Fahrantriebssystems 46 mit einer Drehzahl betrieben wird, welche dem von der Bedienperson vorgegebenen Fahr-Betriebszustand entspricht. Beispielsweise kann die Bedienperson den Fahr-Betätigungshebel 70 in eine Parkstellung bringen. Bei in der Parkstellung positioniertem Fahr-Betätigungshebel 70 ist die Bodenbearbeitungsmaschine 10 grundsätzlich im Stillstand und es kann beispielsweise eine Feststellbremse aktiviert werden, um ein Wegrollen zu verhindern. Durch Verschwenken aus der Parkstellung in eine Fahr-Vorbereitungsstellung wird ein Fahr-Vorbereitungszustand eingenommen. Im Fahr-Vorbereitungszustand bleiben die Fahr-Hydraulikmotoren 56, 58 nachwievor inaktiv, d. h., dass beispielsweise der Elektromotor 50 so wie im Parkzustand außer Betrieb gehalten wird, jedoch die Feststellbremse gelöst wird. Bei Verschwenken aus der dem Fahr-Vorbereitungszustand entsprechenden Fahr-Vorbereitungsstellung in eine einem Fahrzustand entsprechenden Fahrstellung wird beispielsweise eine der jeweiligen Schwenkstellung entsprechende Spannung an den Elektromotor 50 angelegt, so dass dieser die Fahr-Hydraulikpumpe 52 in einer einer jeweiligen Fahrrichtung entsprechenden Drehrichtung antreibt und die beiden Fahr-Hydraulikmotoren 56, 58 mit Druckfluid gespeist werden, wodurch die Bodenbearbeitungsmaschine 10 über den Untergrund 18 bewegt wird.

Dem Bedienpersonsitz 24 kann ein Sitzbelegungssensor 74 zugeordnet sein, welcher Information darüber bereitstellt, ob auf dem Bedienpersonsitz 24 eine Bedienperson sitzt oder nicht. Diese Information kann, ebenso wie die Information über eine jeweilige Betätigungsstellung bzw. einen Betätigungszustand des Fahr-Betätigungsorgans 72, in die Ansteuereinheit 42 eingeleitet werden, um den Elektromotor 38 der elektrohydraulischen Druckfluidquelle 36 unter Berücksichtigung dieser Information zu betreiben.

Unter Berücksichtigung der die Sitzbelegung bzw. den Betätigungszustand des Fahr-Betätigungsorgans 72 repräsentierenden Information kann die Ansteuereinheit 42 den Elektromotor 38 beispielsweise derart ansteuern, dass bei in die Parkstellung gestelltem Fahr-Betätigungsorgan 72 der Elektromotor 38 deaktiviert wird bzw. in einem deaktivierten Zustand gehalten wird, was bedeutet, dass an diesen keine Spannung angelegt wird. Alternativ oder zusätzlich kann dies dann erfolgen, wenn die vom Sitzbelegungssensor 74 gelieferte Information indiziert, dass auf dem Bedienpersonsitz 24 keine Bedienperson sitzt.

Ist das Fahr-Betätigungsorgan 72 in der dem Fahr-Vorbereitungszustand entsprechenden Fahr-Vorbereitungsstellung, was im Allgemeinen dann der Fall ist, wenn auf dem Bedienpersonsitz 24 eine auf das Fahr-Betätigungsorgan 72 einwirkende Bedienperson sitzt, kann durch die Ansteuereinheit 42 der Elektromotor 38 der elektrohydraulischen Druckfluidquelle 36 derart betrieben werden, dass dieser mit einer Grunddrehzahl dreht. Dies hat zur Folge, dass im Lenk-Hydraulikkreislauf 34 ein Druck aufgebaut wird.

Wird das Fahr-Betätigungsorgan 72 in die dem Fahrzustand entsprechende Fahrstellung gebracht, kann unter der Ansteuerwirkung der Ansteuereinheit 42 die an den Elektromotor 38 der elektrohydraulischen Druckfluidquelle 36 angelegte Spannung so vorgegeben werden, dass der Elektromotor 38 mit einer über der Grunddrehzahl liegenden Arbeitsdrehzahl betrieben wird, wobei die Arbeitsdrehzahl beispielsweise fest vorgegeben sein kann. Unter Berücksichtigung der Lenkinformation, also beispielsweise einer Information über den entsprechend einer Betätigung des Lenk-Betätigungsorgans 66 vorzusehenden Lenkwinkel oder einer Lenkwinkeländerungsrate kann die Ansteuereinheit 42 die Arbeitsdrehzahl des Elektromotors 38 der elektrohydraulischen Druckfluidquelle 36 anpassen.

Der Fahr-Hydraulikkreislauf 54 umfasst eine erste Verbindungsleitung 76, welche eine Verbindung herstellt zwischen einem ersten Verbindungsanschluss 78 der Fahr-Hydraulikpumpe 52 und einem jeweiligen ersten Verbindungsanschluss 80, 82 der beiden Fahr-Hydraulikmotoren 56, 58. Ferner umfasst der Fahr-Hydraulikkreislauf 54 eine zweite Verbindungsleitung 84, welche eine Verbindung herstellt zwischen einem zweiten Verbindungsanschluss 86 der Fahr-Hydraulikpumpe 52 und einem jeweiligen zweiten Verbindungsanschluss 88, 90 der beiden Fahr-Hydraulikmotoren 56, 58.

Abhängig davon, in welcher Drehrichtung die Fahr-Hydraulikpumpe 52 durch den Elektromotor 50 der elektrohydraulischen Druckfluidquelle 48 angetrieben wird, wird das im Fahr-Hydraulikkreislauf 54 vorhandene Fluid als Druckfluid über die erste Verbindungsleitung 76 oder die zweite Verbindungsleitung 84 zu den beiden Fahr-Hydraulikmotoren 56, 58 gefördert. Abhängig davon, über welche der beiden Verbindungsleitungen 76, 84 die Fahr-Hydraulikmotoren 56, 58 mit Druckfluid beaufschlagt werden, drehen diese in einer von zwei möglichen Drehrichtungen, wodurch die Bodenbearbeitungsmaschine in verschiedenen Bewegungsrichtungen, also vorwärts oder rückwärts, bewegt werden kann.

Die Ausspeiseventilanordnung 60 umfasst ein als Wegeventil ausgebildetes Umschaltventil 92, welches unter der Ansteuerung einer beispielsweise auch den Elektromotor 50 ansteuernden Ansteuereinheit 94 steht. Das Umschaltventil 92 weist einen ersten Eingangsanschluss 96 auf, welcher an die erste Verbindungsleitung 76 angeschlossen ist, und weist einen zweiten Eingangsanschluss 98 auf, welcher an die zweite Verbindungsleitung 84 angeschlossen ist. Das Umschaltventil 92 umfasst ferner einen Ausgangsanschluss 100, welcher über ein beispielsweise als Proportionalventil ausgebildetes und gleichermaßen unter der Ansteuerung der Ansteuereinheit 94 stehendes Absperrventil 102 an das Fluidreservoir 62 angeschlossen ist.

Bei der Ausspeiseventilanordnung 60 dient das Umschaltventil 92 dazu, grundsätzlich eine Verbindung zwischen einer der beiden Verbindungsleitungen 76, 84 und dem Fluidreservoir 62 herzustellen. Das Umschaltventil 92 kann auch in eine Neutralstellung gebracht werden, in welcher die Verbindung zwischen jeder der beiden Verbindungsleitungen 76, 84 und dem Fluidreservoir 62 grundsätzlich unterbrochen ist, unabhängig davon, in welcher Stellung das Absperrventil 102 ist.

Das Absperrventil 102 wiederum hat die Aufgabe, dann, wenn durch das Umschaltventil 92 eine der beiden Verbindungsleitungen 76, 84 bzw. der zugeordnete erste bzw. zweite Eingangsanschluss 96, 98 in Verbindung mit dem Ausgangsanschluss 100 ist, durch Umschalten zwischen einer Offenstellung und einer Sperrstellung die Verbindung mit dem Fluidreservoir 62 herzustellen bzw. zu unterbrechen, um somit Fluid aus einer der beiden Verbindungsleitungen 76, 84 zum Reservoir 62 auszuspeisen und insbesondere auch die Ausspeisemenge bzw. die Ausspeiserate einzustellen.

In Zuordnung zu dem Fahr-Hydraulikkreislauf 54 sind im dargestellten Ausgestaltungsbeispiel ferner zwei Temperatursensoren 104, 106 vorgesehen. Der Temperatursensor 104 ist so positioniert, dass dieser die Temperatur des Fluids im Fahr-Hydraulikkreislauf 54 in einem Bereich der ersten Verbindungsleitung 76 kurz vor bzw. nahe bei den ersten Verbindungsanschlüssen 80, 82 der Fahr-Hydraulikmotoren 56, 58 erfasst und eine entsprechende Information zur Ansteuereinheit 94 leitet. Der Temperatursensor 106 ist so positioniert, dass er die Temperatur des Fluids im Fahr-Hydraulikkreislauf 54 in der zweiten Verbindungsleitung 84 kurz vor bzw. nahe bei den zweiten Verbindungsanschlüssen 88, 90 der Fahr-Hydraulikmotoren 56, 58 erfasst. Auch die vom Temperatursensor 106 gelieferte Temperaturinformation wird in die Ansteuereinheit 94 eingeleitet.

Unter Berücksichtigung der von den Temperatursensoren 104, 106 bereitgestellten Temperaturinformation steuert die Ansteuereinheit 94 in nachfolgend beschriebener Art und Weise die Ausspeiseventilanordnung 60 derart an, dass zu einer geeigneten Zeit und mit einer geeigneten Menge Fluid aus dem Fahr-Hydraulikkreislauf 54 zum Reservoir 62 ausgespeist wird. Um dabei die Menge des im Fahr-Hydraulikkreislauf 54 vorhandenen bzw. zirkulierenden Fluids im Wesentlichen konstant zu halten, kann gleichzeitig die elektrohydraulische Druckfluidquelle 36 des hydraulischen Lenksystems 30 so betrieben werden, dass über den Lenk-Hydraulikkreislauf 34 ausreichend Fluid in den Fahr-Hydraulikkreislauf 54 nachgespeist wird.

Es sei beispielsweise angenommen, dass der Elektromotor 50 der elektrohydraulischen Druckfluidquelle 48 des hydraulischen Fahrantriebssystems 46 derart betrieben wird, dass die Fahr-Hydraulikpumpe 52 Druckfluid über die erste Verbindungsleitung 76 zu den beiden Fahr-Hydraulikmotoren 56, 58 leitet und diese somit in einer ersten Drehrichtung drehen, beispielsweise um die Bodenbearbeitungsmaschine 10 vorwärts zu bewegen. In diesem Zustand kann bei beispielsweise noch in seiner Sperrstellung gehaltenem Absperrventil 102 das Umschaltventil 92 in eine Ventilstellung geschaltet werden, in welcher der zweite Eingangsanschluss 96 und somit die zweite Verbindungsleitung 84 in Verbindung mit dem Ausgangsanschluss 100 ist. Indiziert das vom Temperatursensor 104 bereitgestellte Signal eine unter einer vorbestimmten Ausspeise-Fluidschwellentemperatur von beispielsweise etwa 50°C oder nicht in einem vorbestimmten Ausspeise-Fluidtemperaturbereich liegende Temperatur des Fluids in einem Bereich kurz stromaufwärts bezüglich der zu speisenden Fahr-Hydraulikmotoren 56, 58, bleibt das Absperrventil 102 in seiner Sperrstellung, so dass kein Fluid aus dem Fahr-Hydraulikkreislauf 54 ausgespeist wird.

Übersteigt die Temperatur des Fluids im Fahr-Hydraulikkreislauf 54 in dem Bereich kurz stromaufwärts der Fahr-Hydraulikmotoren 56, 58 die Ausspeise-Fluidschwellentemperatur bzw. wird der Ausspeise-Fluidtemperaturbereich erreicht, wird das Absperrventil 102 durch die Ansteuereinheit 94 derart angesteuert, dass Fluid aus dem Fahr-Hydraulikkreislauf 54 in das Fluidreservoir 62 ausgespeist wird. Hier kann beispielsweise für einen jeweiligen Ausspeisevorgang vorgesehen sein, dass eine durch entsprechende Ansteuerung des Absperrventils 102 definierte Menge des Fluids beispielsweise auch mit einer definierten Rate ausgespeist wird, um sicherzustellen, dass über den Lenk-Hydraulikkreislauf 34 ausreichend Fluid nachgespeist werden kann.

Wird die Fahr-Hydraulikpumpe 52 derart betrieben, dass den beiden Fahr-Hydraulikmotoren 56, 58 Druckfluid über die zweite Verbindungsleitung 84 zugeführt wird, kann, beispielsweise bei wiederum in seiner Sperrstellung gehaltenem Absperrventil 102, das Umschaltventil 92 in eine derartige Ventilstellung gebracht werden, in welcher eine Verbindung zwischen dem ersten Eingangsanschluss 96 und dem Ausgangsanschluss 100 und somit eine Verbindung zwischen der ersten Verbindungsleitung 76 und dem Ausgangsanschluss 100 hergestellt ist. Indiziert das vom Temperatursensor 106 kurz vor dem Bereich der Einspeisung des Druckfluids in die beiden Fahr-Hydraulikmotoren 56, 58 gelieferte Temperatursignal, dass in diesem Bereich die Temperatur des Fluids über der Ausspeise-Fluidschwellentemperatur bzw. in dem Ausspeise-Fluidtemperaturbereich liegt, steuert die Ansteuereinheit 94 das Absperrventil 102 derart an, dass Fluid mit einer vorbestimmten Menge oder/und einer vorbestimmten Abgaberate aus der ersten Verbindungsleitung 76 in Richtung zum Fluidreservoir 62 ausgespeist wird.

Durch das Ausspeisen von Fluid aus dem Fahr-Hydraulikkreislauf 54 nur dann, wenn dieses beispielsweise eine ausreichend hohe Temperatur hat, wird gewährleistet, dass beispielsweise bei Inbetriebnahme des hydraulischen Fahrantriebssystems 46 bzw. der Bodenbearbeitungsmaschine 10 zunächst ein Ausspeisen unterdrückt wird und dafür gesorgt wird, dass das Fluid schnell auf eine geeignete Betriebstemperatur beispielsweise im Bereich von etwa 40°C bis 65°C gebracht wird. Durch das Unterdrücken eines Ausspeisens dann, wenn die Temperatur des Fluids noch nicht ausreichend hoch ist, wird die Zeitdauer, bis zum Erreichen einer ausreichenden Temperatur möglichst kurz gehalten, um auf diese Art und Weise möglichst schnell in einen Betriebszustand zu kommen, in welchem aufgrund ausreichend geringer Viskosität des Fluids ein hoher Wirkungsgrad im hydraulischen Fahrantriebssystem 46 erreicht ist. Erst dann, wenn dies gewährleistet ist, wird zum Halten der Temperatur des Fluids im Fahr-Hydraulikkreislauf 54 in einem optimalen Bereich wiederholt in aufeinander folgenden Ausspeisevorgängen Fluid ausgespeist. Alternativ könnte in einem derartigen Betriebszustand auch kontinuierlich mit vergleichsweise geringer Rate Fluid ausgespeist werden und aus dem Fluidreservoir 62 über den Lenk-Hydraulikkreislauf 34 Fluid nachgespeist werden.

Weiterhin wird bei der vorangehend beschriebenen Vorgehensweise Fluid aus dem Fahr-Hydraulikkreislauf 54 jeweils aus demjenigen Bereich ausgespeist, welcher nicht zur Zufuhr von Druckfluid zu den Fahr-Hydraulikmotoren 56, 58 genutzt wird. Dies verhindert, dass auf der Druckseite der Fahr-Hydraulikmotoren 56, 58, also im Bereich derjenigen Verbindungsleitung 76, 84, welche zur Zufuhr von Druckfluid zu den Fahr-Hydraulikmotoren 56, 58 genutzt wird, aufgrund des Ausspeisens von Fluid ein Druckabfall entsteht.

Die Berücksichtigung der Temperatur des Fluids im Fahr-Hydraulikkreislauf 54 jeweils in einem Bereich kurz stromaufwärts bezüglich der mit Druckfluid versorgten Fahr-Hydraulikmotoren 56, 58 sorgt weiter dafür, dass eine Fluidtemperatur berücksichtigt wird, welche näherungsweise einer mittleren Temperatur entspricht. Im Allgemeinen wird das Fluid im Fluidreservoir 62 die niedrigste Temperatur haben und wird in einem Bereich kurz stromabwärts der mit Druckfluid versorgten Fahr-Hydraulikmotoren 56, 58 die höchste Temperatur haben. Gleichwohl wird darauf hingewiesen, dass selbstverständlich auch die Temperatur des Fluids an anderen Bereichen des Fahr-Hydraulikkreislaufs 54 bzw. des hydraulischen Fahrantriebssystems 46 berücksichtigt werden kann.

In Fig. 2 sind als Systembereiche eines Fluidrücklaufs, über welchen Fluid in das Fluidreservoir 62 zurückgespeist wird, eine Leckageleitung 108 sowie ein Fluidkühler 110 dargestellt. Über die Leckageleitung 108 kann beispielsweise eine in den Fahr-Hydraulikmotoren 56, 58 auftretende Fluidleckage in das Fluidreservoir 62 zurückgespeist werden. Aus verschiedenen Systembereichen in das Fluidreservoir zurückgeleitetes Fluid kann durch den oder gegebenenfalls mehrere Fluidkühler 110 hindurch geleitet werden, um dort Wärme abzugeben. Auch im Bereich eines derartigen Fluidrücklaufs, also beispielsweise im Bereich der Leckageleitung 108, kann die Temperatur des Fluid erfasst werden und als Grundlage für das Auslösen eines Ausspeisevorgangs genutzt werden.

Die Prinzipien der vorliegenden Erfindung, bei welcher ein Ausspeisen von Fluid aus dem Fahr-Hydraulikkreislauf 54 dann erfolgt, wenn die Effizienz des hydraulischen Fahrantriebs 46 nicht beeinträchtigt wird bzw. erhöht werden kann, können auch Anwendung finden, wenn zusätzlich zur Berücksichtigung der Temperatur des Fluids im Fahr-Hydraulikkreislauf 54 andere Parameter berücksichtigt werden. Beispielsweise kann in gleicher Art und Weise die Umgebungstemperatur im Bereich der Bodenbearbeitungsmaschine 10 berücksichtigt werden, da eine niedrige Umgebungstemperatur im Allgemeinen auch dazu führt, dass das Fluid im Fahr-Hydraulikkreislauf 54 eine vergleichsweise niedrige Temperatur aufweist. Im Zusammenhang mit der Umgebungstemperatur können also eine Ausspeise-Umgebungsschwellentemperatur bzw. ein Ausspeise-Umgebungstemperaturbereich definiert werden, deren Überschreiten bzw. Erreichen das Auslösen eines Ausspeisevorgangs zur Folge hat. Auch die unmittelbar im Zusammenhang mit der Temperatur des Fluids stehende Viskosität des Fluids im Fahr-Hydraulikkreislauf 54 kann als Parameter beim Zulassen bzw. Unterdrücken eines Ausspeisevorgangs berücksichtigt werden, ebenso wie der Verschmutzungsgrad des Fluids im Fahr-Hydraulikkreislauf 54. Als weiterer Parameter kann die Zeitdauer seit der Inbetriebnahme des hydraulischen Fahrantriebssystems 46 berücksichtigt werden. Wird eine vorbestimmte Betriebsdauer erreicht, kann davon ausgegangen werden, dass das Fluid im Fahr-Hydraulikkreislauf 54 eine ausreichend hohe Temperatur erreicht hat, so dass ein Ausspeisen von Fluid nicht zu einer Effizienzbeeinträchtigung des Fahr-Hydraulikkreislauf führt. Auch die Zeitdauer seit der letzten Durchführung eines derartigen Ausspeisevorgangs kann als Kriterium für das erneute Durchführen eines Ausspeisevorgangs herangezogen werden.

Erfindungsgemäß werden mehrere derartige Parameter dadurch verknüpft, dass einer oder mehrere dieser Parameter grundsätzlich als Kriterium für das Auslösen eines Ausspeisevorgangs herangezogen wird, während einer oder mehrere andere Parameter für die Bestimmung der Menge bzw. der Rate, mit welcher Fluid ausgespeist wird, herangezogen wird. Erfindungsgemäß wird die Temperatur des Fluids im Fahr-Hydraulikkreislauf 54 in der vorangehend beschriebenen Art und Weise als Kriterium für das Auslösen eines Ausspeisevorgangs herangezogen, während beispielsweise die Umgebungstemperatur als Kriterium für die Menge des auszuspeisenden Fluids oder/und die Ausspeiserate herangezogen werden kann, beispielsweise derart, dass mit zunehmender Umgebungstemperatur auch die Ausspeisemenge des Fluids oder/und die Ausspeiserate zunimmt.

Es ist abschließend darauf hinzuweisen, dass eine derartige Bodenbearbeitungsmaschine selbstverständlich in verschiedensten Aspekten variiert werden kann. So kann bei dem hydraulischen Lenksystem die elektrohydraulische Druckfluidquelle mehrere Lenk-Druckfluidpumpen umfassen, wobei diese durch einen gemeinsamen oder ggf. jeweils einen separaten Elektromotor der elektrohydraulischen Druckfluidquelle betrieben werden können. Auch im Bereich des hydraulischen Fahrantriebssystems können mehrere Fahr-Hydraulikpumpen vorgesehen sein, die durch einen gemeinsamen oder ggf. jeweils separate Elektromotoren angetrieben werden können. Wie bereits erläutert, kann selbstverständlich eine zum Beispiel als Bodenverdichter ausgebildete Bodenbearbeitungsmaschine selbst hinsichtlich des Einsatzes von Bodenbearbeitungswalzen bzw. Antriebsrädern anders gestaltet sein, als vorangehend beschrieben bzw. in Fig. 1 dargestellt. Ferner können zusätzlich zu den vorangehend angeführten Parametern weitere für den Betrieb des hydraulischen Fahrantriebssystems relevante Einflussgrößen für das Ausspeisen von Fluid aus dem Fahr-Hydraulikkreislauf bzw. das Unterdrücken eines Ausspeisens berücksichtigt werden.

## Patentansprüche

1. Bodenbearbeitungsmaschine, insbesondere Bodenverdichter, umfassend ein hydraulisches Fahrantriebssystem (46), wobei das hydraulische Fahrantriebssystem (46) umfasst:
- eine Druckfluidquelle (48) mit wenigstens einer Fahr-Hydraulikpumpe (52),
- einen durch die wenigstens eine Fahr-Hydraulikpumpe (52) mit Druckfluid gespeisten Fahr-Hydraulikkreislauf (54),
- wenigstens einen aus dem Fahr-Hydraulikkreislauf (54) mit Druckfluid gespeisten Fahr-Hydraulikmotor (56, 58),
- eine Ausspeiseventilanordnung (60) zur Abgabe von Fluid aus dem Fahr-Hydraulikkreislauf (54) in ein Fluidreservoir (62),
- eine Ansteuereinheit (94) zum Ansteuern der Ausspeiseventilanordnung (60),
wobei das hydraulische Fahrantriebssystem (46) dazu ausgebildet ist, die Ausspeiseventilanordnung (60) in Abhängigkeit von wenigstens einem der folgenden Parameter zur Abgabe von Fluid zu dem Fluidreservoir (62) zu betreiben:
- eine Temperatur des Fluids im Fahr-Hydraulikkreislauf (54),
- eine Temperatur des Fluids in einem Fluidrücklauf zum Fluidreservoir (62),
- eine Umgebungstemperatur,
- eine Viskosität des Fluids im Fahr-Hydraulikkreislauf (54),
- ein Verschmutzungsgrad des Fluids im Fahr-Hydraulikkreislauf (54),
- eine Zeitdauer seit der letzten Inbetriebnahme des hydraulischen Fahrantriebssystems (46),
- eine Zeitdauer seit der letzten Fluidausspeisung aus dem Fahr-Hydraulikkreislauf (54),
wobei das hydraulische Fahrantriebssystem (46) dazu ausgebildet ist, die Ausspeiseventilanordnung (60) zur Abgabe von Fluid zu dem Fluidreservoir (62) zu betreiben, wenn die Temperatur des Fluids im Fahr-Hydraulikkreislauf (54) über einer vorbestimmten Ausspeise-Fluidschwellentemperatur oder in einem vorbestimmten Ausspeise-Fluidtemperaturbereich liegt,
**dadurch gekennzeichnet,**
**dass** die Druckfluidquelle (48) eine elektrohydraulische Druckfluidquelle (48) mit wenigstens einem Elektromotor (50) ist, und
**dass** bei Betreiben der Ausspeiseventilanordnung (60) zur Abgabe von Fluid aus dem Fahr-Hydraulikkreislauf (54) zu dem Fluidreservoir (62) die Menge des zu dem Fluidreservoir (62) abgegebenen Fluids oder/und die Fluidabgaberate in Abhängigkeit von wenigstens einem der folgenden Parameter eingestellt wird:
- der Umgebungstemperatur,
- dem Verschmutzungsgrad,
- der seit der letzten Inbetriebnahme des hydraulischen Fahrantriebssystems (46) vergangenen Zeit,
- der seit der letzten Fluidausspeisung aus dem Fahr-Hydraulikkreislauf (54) vergangenen Zeit.

2. Bodenbearbeitungsmaschine nach Anspruch 1,
**dadurch gekennzeichnet, dass** der Fahr-Hydraulikkreislauf (54) eine erste Verbindungsleitung (76) zwischen einem ersten Verbindungsanschluss (78) der wenigstens einen Fahr-Hydraulikpumpe (52) und einem ersten Verbindungsanschluss (80, 82) des wenigstens einen Fahr-Hydraulikmotors (56, 58) zum Fördern von Druckfluid von dem ersten Verbindungsanschluss (78) der wenigstens einen Fahr-Hydraulikpumpe (52) zu dem ersten Verbindungsanschluss (80, 82) des wenigstens einen Fahr-Hydraulikmotors (56, 58) zum Betreiben des wenigstens einen Fahr-Hydraulikmotors (56, 58) in einer ersten Drehrichtung und eine zweite Verbindungsleitung (84) zwischen einem zweiten Verbindungsanschluss (86) der wenigstens einen Fahr-Hydraulikpumpe (52) und einem zweiten Verbindungsanschluss (88, 90) des wenigstens einen Fahr-Hydraulikmotors (56, 58) zum Fördern von Druckfluid von dem zweiten Verbindungsanschluss (86) der wenigstens einen Fahr-Hydraulikpumpe (52) zu dem zweiten Verbindungsanschluss (88, 90) des wenigstens einen Fahr-Hydraulikmotors (56, 58) zum Betreiben des wenigstens einen Fahr-Hydraulikmotors (56, 58) in einer zweiten Drehrichtung umfasst.

3. Bodenbearbeitungsmaschine nach Anspruch 2,
**dadurch gekennzeichnet, dass** das hydraulische Fahrantriebssystem (46) dazu ausgebildet ist, die Ausspeiseventilanordnung (60) zum Ausspeisen von Fluid aus der zweiten Verbindungsleitung (84) zu betreiben, wenn der wenigstens eine Fahr-Hydraulikmotor (56, 58) über die erste Verbindungsleitung (76) mit Druckfluid gespeist wird, oder/und dass das hydraulische Fahrantriebssystem (46) dazu ausgebildet ist, die Ausspeiseventilanordnung (60) zum Ausspeisen von Fluid aus der ersten Verbindungsleitung (76) zu betreiben, wenn der wenigstens eine Fahr-Hydraulikmotor (56, 58) über die zweite Verbindungsleitung (84) mit Druckfluid gespeist wird.

4. Bodenbearbeitungsmaschine nach Anspruch 2 oder 3,
**dadurch gekennzeichnet, dass** die Ausspeiseventilanordnung (60) ein Umschaltventil (92) mit einem an die erste Verbindungsleitung (76) angeschlossenen ersten Eingangsanschluss (96), einem an die zweite Verbindungsleitung (84) angeschlossenen zweiten Eingangsanschluss (98) und einem an das Fluidreservoir (62) angeschlossenen Ausgangsanschluss (100) umfasst, wobei in einer ersten Ventilstellung des Umschaltventils (92) eine Verbindung zwischen dem ersten Eingangsanschluss (96) und dem Ausgangsanschluss (100) besteht und keine Verbindung zwischen dem zweiten Eingangsanschluss (98) und dem Ausgangsanschluss (100) besteht und in einer zweiten Ventilstellung des Umschaltventils (92) eine Verbindung zwischen dem zweiten Eingangsanschluss (98) und dem Ausgangsanschluss (100) besteht und keine Verbindung zwischen dem ersten Eingangsanschluss (96) und dem Ausgangsanschluss (100) besteht.

5. Bodenbearbeitungsmaschine nach Anspruch 4,
**dadurch gekennzeichnet, dass** der Ausgangsanschluss (100) des Umschaltventils (92) über ein Absperrventil (102) an das Fluidreservoir (62) angeschlossen ist, wobei in einer Offenstellung des Absperrventils (102) eine Verbindung zwischen dem Ausgangsanschluss (100) und dem Fluidreservoir (62) besteht und in einer Sperrstellung des Absperrventils (102) keine Verbindung zwischen dem Ausgangsanschluss (100) und dem Fluidreservoir (62) besteht.

6. Bodenbearbeitungsmaschine nach einem der Ansprüche 2-5,
**dadurch gekennzeichnet, dass** das hydraulische Fahrantriebssystem (46) dazu ausgebildet ist, die Ausspeiseventilanordnung (60) zur Abgabe von Fluid zu dem Fluidreservoir (62) in Abhängigkeit von der Temperatur des Fluids in der ersten Verbindungsleitung (76) zu betreiben, wenn der wenigstens ein Fahr-Hydraulikmotor (56, 58) über die erste Verbindungsleitung (76) mit Druckfluid gespeist wird, und die Ausspeiseventilanordnung (60) zur Abgabe von Fluid zu dem Fluidreservoir (62) in Abhängigkeit von der Temperatur des Fluids in der zweiten Verbindungsleitung (84) zu betreiben, wenn der wenigstens ein Fahr-Hydraulikmotor (56, 58) über die zweite Verbindungsleitung (84) mit Druckfluid gespeist wird.

7. Bodenbearbeitungsmaschine nach einem der Ansprüche 1-6,
**dadurch gekennzeichnet, dass** das hydraulische Fahrantriebssystem (46) dazu ausgebildet ist, die Ausspeiseventilanordnung (60) zur Abgabe von Fluid zu dem Fluidreservoir (62) zu betreiben, wenn die Temperatur des Fluids in einer zu dem Fluidreservoir (62) führenden Leckageleitung (108) über einer vorbestimmten Ausspeise-Fluidschwellentemperatur oder/und in einem vorbestimmten Ausspeise-Fluidtemperaturbereich liegt.

8. Bodenbearbeitungsmaschine nach einem der Ansprüche 1-7,
**dadurch gekennzeichnet, dass** das hydraulische Fahrantriebssystem (46) dazu ausgebildet ist, die Ausspeiseventilanordnung (60) zur Abgabe von Fluid zu dem Fluidreservoir (62) zu betreiben, wenn die Umgebungstemperatur über einer vorbestimmten Ausspeise-Umgebungsschwellentemperatur oder/und in einem vorbestimmten Ausspeise-Umgebungstemperaturbereich liegt.

9. Bodenbearbeitungsmaschine nach einem der Ansprüche 1-8,
**dadurch gekennzeichnet, dass** das hydraulische Fahrantriebssystem (46) dazu ausgebildet ist, die Ausspeiseventilanordnung (60) zur Abgabe von Fluid zu dem Fluidreservoir (62) zu betreiben, wenn die Viskosität des Fluids in dem Fahr-Hydraulikkreislauf (54) unter einer vorbestimmten Schwellenviskosität oder/und in einem vorbestimmten Viskositätsbereich liegt.

10. Bodenbearbeitungsmaschine nach einem der Ansprüche 1-9,
**dadurch gekennzeichnet, dass** das hydraulische Fahrantriebssystem (46) dazu ausgebildet ist, die Ausspeiseventilanordnung (60) zur Abgabe von Fluid zu dem Fluidreservoir (62) zu betreiben, wenn der Verschmutzungsgrad des Fluids in dem Fahr-Hydraulikkreislauf (54) über einem vorbestimmten Ausspeise-Schwellenverschmutzungsgrad oder/und in einem vorbestimmten Verschmutzungsgradbereich liegt.

11. Bodenbearbeitungsmaschine nach einem der Ansprüche 1-10,
**dadurch gekennzeichnet, dass** das hydraulische Fahrantriebssystem (46) dazu ausgebildet ist, die Ausspeiseventilanordnung (60) zur Abgabe von Fluid zu dem Fluidreservoir (62) zu betreiben, wenn seit der letzten Inbetriebnahme des hydraulischen Fahrantriebssystems (46) eine vorbestimmte Zeit vergangen ist, oder/und wenn seit der letzten Fluidausspeisung aus dem Fahr-Hydraulikkreislauf (54) eine vorbestimmte Zeit vergangen ist.

12. Bodenbearbeitungsmaschine nach einem der Ansprüche 1-11,
**dadurch gekennzeichnet, dass** ein Lenk-Hydraulikkreislauf (34) vorgesehen ist, und dass der Lenk-Hydraulikkreislauf (34) dazu ausgebildet ist, Fluid in den Fahr-Hydraulikkreislauf (54) nachzuspeisen.

13. Verfahren zum Betreiben einer Bodenbearbeitungsmaschine (10), die Bodenbearbeitungsmaschine (10) umfassend ein hydraulisches Fahrantriebssystem (46), wobei das hydraulische Fahrantriebssystem (46) umfasst:
- eine elektrohydraulische Druckfluidquelle (48) mit wenigstens einem Elektromotor (50) und wenigstens einer Fahr-Hydraulikpumpe (52),
- einen durch die wenigstens eine Fahr-Hydraulikpumpe (52) mit Druckfluid gespeisten Fahr-Hydraulikkreislauf (54),
- wenigstens einen aus dem Fahr-Hydraulikkreislauf (54) mit Druckfluid gespeisten Fahr-Hydraulikmotor (56, 58),
- eine Ausspeiseventilanordnung (60) zur Abgabe von Fluid aus dem Fahr-Hydraulikkreislauf (54) in ein Fluidreservoir (62),
- eine Ansteuereinheit (94) zum Ansteuern der Ausspeiseventilanordnung (60),
wobei die Ausspeiseventilanordnung (60) in Abhängigkeit von wenigstens einem der folgenden Parameter zur Abgabe von Fluid zu dem Fluidreservoir (62) betrieben wird:
- eine Temperatur des Fluids im Fahr-Hydraulikkreislauf (54),
- eine Temperatur des Fluids in einem Fluidrücklauf zum Fluidreservoir (62),
- eine Umgebungstemperatur,
- eine Viskosität des Fluids im Fahr-Hydraulikkreislauf (54),
- ein Verschmutzungsgrad des Fluids im Fahr-Hydraulikkreislauf (54),
- eine Zeitdauer seit der letzten Inbetriebnahme des hydraulischen Fahrantriebssystems (46),
- eine Zeitdauer seit der letzten Fluidausspeisung aus dem Fahr-Hydraulikkreislauf (54),
wobei die Ausspeiseventilanordnung (60) zur Abgabe von Fluid zu dem Fluidreservoir (62) betrieben wird, wenn die Temperatur des Fluids im Fahr-Hydraulikkreislauf (54) über einer vorbestimmten Ausspeise-Fluidschwellentemperatur oder in einem vorbestimmten Ausspeise-Fluidtemperaturbereich liegt,
bei welchem Verfahren bei Betreiben der Ausspeiseventilanordnung (60) zur Abgabe von Fluid aus dem Fahr-Hydraulikkreislauf (54) zu dem Fluidreservoir (62) die Menge des zu dem Fluidreservoir (62) abgegebenen Fluids oder/und die Fluidabgaberate in Abhängigkeit von wenigstens einem der folgenden Parameter eingestellt wird:
- der Umgebungstemperatur,
- dem Verschmutzungsgrad,
- der seit der letzten Inbetriebnahme des hydraulischen Fahrantriebssystems (46) vergangenen Zeit,
- der seit der letzten Fluidausspeisung aus dem Fahr-Hydraulikkreislauf (54) vergangenen Zeit.

## Claims

1. A soil processing machine, in particular a soil compactor, comprising a hydraulic drive system (46), wherein the hydraulic drive system (46) comprises:
- a pressurized fluid source (48) with at least one hydraulic drive pump (52),
- a hydraulic drive circuit (54) supplied with pressurized fluid by the at least one hydraulic drive pump (52),
- at least one hydraulic drive motor (56, 58) supplied with pressurized fluid from the hydraulic drive circuit (54),
- a discharge valve assembly (60) for discharging fluid from the hydraulic drive circuit (54) into a fluid reservoir (62),
- a control unit (94) for controlling the discharge valve assembly (60),
wherein the hydraulic drive system (46) is designed to operate the discharge valve assembly (60) as a function of at least one of the following parameters for discharging fluid to the fluid reservoir (62):
- a temperature of the fluid in the hydraulic drive circuit (54),
- a temperature of the fluid in a fluid return to the fluid reservoir (62),
- an ambient temperature,
- a viscosity of the fluid in the hydraulic drive circuit (54),
- a degree of contamination of the fluid in the hydraulic drive circuit (54),
- a period of time since the last start-up of the hydraulic drive system (46),
- a period of time since the last fluid discharge from the hydraulic drive circuit (54),
wherein the hydraulic drive system (46) is designed to operate the discharge valve assembly (60) to discharge fluid to the fluid reservoir (62) when the temperature of the fluid in the hydraulic drive circuit (54) is above a predetermined discharge fluid threshold temperature and/or is within a predetermined discharge fluid temperature range,
**characterized in that**
the pressurized fluid source (48) is an electrohydraulic pressurized fluid source (48) with at least one electric motor (50), and
when the discharge valve assembly (60) is operated to discharge fluid from the hydraulic drive circuit (54) to the fluid reservoir (62) the amount of fluid discharged to the fluid reservoir (62) or/and the fluid discharge rate is set as a function of at least one of the following parameters:
- an ambient temperature,
- a degree of contamination,
- a period of time since the last start-up of the hydraulic drive system (46),
- a period of time since the last fluid discharge from the hydraulic drive circuit (54).

2. The soil processing machine according to claim 1,
**characterized in that** the hydraulic drive circuit (54) comprises a first connecting line (76) between a first connection port (78) of the at least one hydraulic drive pump (52) and a first connection port (80, 82) of the at least one hydraulic drive motor (56, 58) for conveying pressurized fluid from the first connection port (78) of the at least one hydraulic drive pump (52) to the first connection port (80, 82) of the at least one hydraulic drive motor (56, 58) in order to operate the at least one hydraulic drive motor (56, 58) in a first direction of rotation; the hydraulic drive circuit also comprises a second connecting line (84) between a second connection port (86) of the at least one hydraulic drive pump (52) and a second connection port (88, 90) of the at least one hydraulic drive motor (56, 58) for conveying pressurized fluid from the second connection port (88, 90) of the at least one hydraulic drive pump (52) to the second connection port (88, 90) of the at least one hydraulic drive motor (56, 58) in order to operate the at least one hydraulic drive motor (56, 58) in a second direction of rotation.

3. The soil processing machine according to claim 2,
**characterized in that** the hydraulic drive system (46) is designed to operate the discharge valve assembly (60) to discharge fluid from the second connecting line (84) when the at least one hydraulic drive motor (56, 58) is fed with pressurized fluid via the first connecting line (76), and/or the hydraulic drive system (46) is designed to operate the discharge valve assembly (60) to discharge fluid from the first connecting line (76) when the at least one hydraulic drive motor (56, 58) is fed with pressurized fluid via the second connecting line (84).

4. The soil processing machine according to claim 2 or 3,
**characterized in that** the discharge valve assembly (60) comprises a switching valve (92) with a first inlet port (96) connected to the first connecting line (76), a second inlet port (98) connected to the second connecting line (84), and an outlet port (100) connected to the fluid reservoir (62), wherein, in a first valve position of the switching valve (92), there is a connection between the first inlet port (96) and the outlet port (100) and there is no connection between the second inlet port (98) and the outlet port (100) and, in a second valve position of the switching valve (92), there is a connection between the second inlet port (98) and the outlet port (100) and there is no connection between the first inlet port (96) and the outlet port (100).

5. The soil processing machine according to claim 4,
**characterized in that** the outlet port (100) of the switching valve (92) is connected to the fluid reservoir (62) via a shut-off valve (102), wherein, in an open position of the shut-off valve (102), there is a connection between the outlet port (100) and the fluid reservoir (62) and, in a closed position of the shut-off valve (102), there is no connection between the outlet port (100) and the fluid reservoir (62).

6. The soil processing machine according to any of claims 2-5,
**characterized in that** the hydraulic drive system (46) is designed to operate the discharge valve assembly (60) for discharging fluid to the fluid reservoir (62) as a function of the temperature of the fluid in the first connecting line (76) when the at least one hydraulic drive motor (56, 58) is supplied with pressurized fluid via the first connecting line (76) and designed to operate the discharge valve assembly (60) for discharging fluid to the fluid reservoir (62) as a function of the temperature of the fluid in the second connecting line (84) when the at least one hydraulic drive motor (56, 58) is supplied with pressurized fluid via the second connecting line (84).

7. The soil processing machine according to any of claims 1-6,
**characterized in that** the hydraulic drive system (46) is designed to operate the discharge valve assembly (60) to discharge fluid to the fluid reservoir (62) when the temperature of the fluid in a leakage line (108) leading to the fluid reservoir (62) is above a predetermined discharge fluid threshold temperature and/or is within a predetermined discharge fluid temperature range.

8. The soil processing machine according to any of claims 1-7,
**characterized in that** the hydraulic drive system (46) is designed to operate the discharge valve assembly (60) to discharge fluid to the fluid reservoir (62) when the ambient temperature is above a predetermined discharge fluid threshold temperature and/or is within a predetermined discharge fluid temperature range.

9. The soil processing machine according to any of claims 1-8,
**characterized in that** the hydraulic drive system (46) is designed to operate the discharge valve assembly (60) to discharge fluid to the fluid reservoir (62) when the viscosity of the fluid in the hydraulic drive circuit (54) is below a predetermined threshold viscosity and/or is within a predetermined viscosity range.

10. The soil processing machine according to any of claims 1-9,
**characterized in that** the hydraulic drive system (46) is designed to operate the discharge valve assembly (60) to discharge fluid to the fluid reservoir (62) when the degree of contamination of the fluid in the hydraulic drive circuit (54) is above a predetermined degree-of-contamination discharge threshold and/or is within a predetermined degree-of-contamination range.

11. The soil processing machine according to any of claims 1-10,
**characterized in that** the hydraulic drive system (46) is designed to operate the discharge valve assembly (60) to discharge fluid to the fluid reservoir (62) when a predetermined time has elapsed since the last start-up of the hydraulic drive system (46) and/or when a predetermined time has elapsed since the last fluid discharge from the hydraulic drive circuit (54).

12. The soil processing machine according to any of claims 1-11,
**characterized in that** a hydraulic steering circuit (34) is provided and **in that** the hydraulic steering circuit (34) is designed to replenish fluid in the hydraulic drive circuit (54).

13. A method for operating a soil processing machine (10), the soil processing machine (10) comprising a hydraulic drive system (46), wherein the hydraulic drive system comprises (46):
- an electrohydraulic pressurized fluid source (48) with at least one electric motor (50) and at least one hydraulic drive pump (52),
- a hydraulic drive circuit (54) supplied with pressurized fluid by the at least one hydraulic drive pump (52),
- at least one hydraulic drive motor (56, 58) supplied with pressurized fluid from the hydraulic drive circuit (54),
- a discharge valve assembly (60) for discharging fluid from the hydraulic drive circuit (54) into a fluid reservoir (62),
- a control unit (94) for controlling the discharge valve assembly (60),
wherein the discharge valve assembly (60) is operated to discharge fluid to the fluid reservoir (62) as a function of at least one of the following parameters:
- a temperature of the fluid in the hydraulic drive circuit (54),
- a temperature of the fluid in a fluid return to the fluid reservoir (62),
- an ambient temperature,
- a viscosity of the fluid in the hydraulic drive circuit (54),
- a degree of contamination of the fluid in the hydraulic drive circuit (54),
- a period of time since the last start-up of the hydraulic drive system (46),
- a period of time since the last fluid discharge from the hydraulic drive circuit (54),
wherein the discharge valve assembly (60) is operated to discharge fluid to the fluid reservoir (62) when the temperature of the fluid in the hydraulic drive circuit (54) is above a predetermined discharge fluid threshold temperature or is within a predetermined discharge fluid temperature range,
in which method, when the discharge valve assembly (60) is operated to discharge fluid from the hydraulic drive circuit (54) to the fluid reservoir (62), the quantity of fluid discharged to the fluid reservoir (62) and/or the fluid discharge rate is adjusted as a function of at least one of the following parameters:
- the ambient temperature,
- the degree of contamination,
- the time that has elapsed since the last start-up of the hydraulic drive system (46),
- the time that has elapsed since the last fluid discharge from the hydraulic drive circuit (54).

## Revendications

1. Une machine de traitement du sol, en particulier un compacteur de sol, comprenant un système d'entraînement hydraulique (46), dans lequel le système d'entraînement hydraulique (46) comprend :
- une source de fluide sous pression (48) avec au moins une pompe d'entraînement hydraulique (52),
- un circuit d'entraînement hydraulique (54) alimenté en fluide sous pression par ladite au moins une pompe d'entraînement hydraulique (52),
- au moins un moteur d'entraînement hydraulique (56, 58) alimenté en fluide sous pression par le circuit d'entraînement hydraulique (54),
- un agencement de vanne de décharge (60) pour décharger du fluide du circuit d'entraînement hydraulique (54) dans un réservoir de fluide (62),
- une unité de commande (94) pour commander l'agencement de vanne de décharge (60),
dans lequel le système d'entraînement hydraulique (46) est conçu pour faire fonctionner l'agencement de vanne de décharge (60) en fonction d'au moins un des paramètres suivants pour décharger du fluide dans le réservoir de fluide (62) :
- une température du fluide dans le circuit d'entraînement hydraulique (54),
- une température du fluide dans un retour de fluide vers le réservoir de fluide (62),
- une température ambiante,
- une viscosité du fluide dans le circuit d'entraînement hydraulique (54),
- un degré de contamination du fluide dans le circuit d'entraînement hydraulique (54),
- une période de temps depuis le dernier démarrage du système d'entraînement hydraulique (46),
- une période de temps depuis la dernière décharge de fluide du circuit d'entraînement hydraulique (54),
dans lequel le système d'entraînement hydraulique (46) est conçu pour faire fonctionner l'agencement de vanne de décharge (60) afin de décharger du fluide dans le réservoir de fluide (62) lorsque la température du fluide dans le circuit d'entraînement hydraulique (54) est supérieure à une température seuil prédéterminée du fluide de décharge et/ou se situe dans une plage de température prédéterminée du fluide de décharge,
**caractérisé en ce que**
la source de fluide sous pression (48) est une source de fluide sous pression électrohydraulique (48) avec au moins un moteur électrique (50), et
lorsque l'agencement de vanne de décharge (60) est actionné pour décharger du fluide du circuit d'entraînement hydraulique (54) vers le réservoir de fluide (62), la quantité de fluide déchargé dans le réservoir de fluide (62) et/ou la vitesse de décharge du fluide est réglée en fonction d'au moins l'un des paramètres suivants :
- la température ambiante,
- le degré de contamination,
- le temps écoulé depuis le dernier démarrage du système d'entraînement hydraulique (46),
- le temps écoulé depuis la dernière décharge de fluide du circuit d'entraînement hydraulique (54).

2. La machine de traitement du sol selon la revendication 1,
**caractérisée en ce que** le circuit d'entraînement hydraulique (54) comprend une première conduite de raccordement (76) entre un premier élément de raccordement (78) d'au moins une pompe d'entraînement hydraulique (52) et un premier élément de raccordement (80, 82) dudit au moins un moteur d'entraînement hydraulique (56, 58) pour transporter du fluide sous pression du premier élément de raccordement (78) de ladite au moins une pompe d'entraînement hydraulique (52) vers le premier élément de raccordement (80, 82) dudit au moins un moteur d'entraînement hydraulique (56, 58) afin de faire fonctionner ledit au moins un moteur d'entraînement hydraulique (56, 58) dans un premier sens de rotation ; le circuit d'entraînement hydraulique comprend également une deuxième conduite de raccordement (84) entre un deuxième élément de raccordement (89, 90) de ladite au moins une pompe d'entraînement hydraulique (52) et un deuxième élément de raccordement (88, 90) dudit au moins un moteur d'entraînement hydraulique (56, 58) pour transporter du fluide sous pression du deuxième élément de raccordement (86) de ladite au moins une pompe d'entraînement hydraulique (52) au deuxième élément de raccordement (88, 90) dudit au moins un moteur d'entraînement hydraulique (56, 58) afin de faire fonctionner ledit au moins un moteur d'entraînement hydraulique (56, 58) dans un deuxième sens de rotation.

3. La machine de traitement du sol selon la revendication 2,
**caractérisée en ce que** le système d'entraînement hydraulique (46) est conçu pour faire fonctionner l'agencement de vanne de décharge (60) afin de décharger du fluide de la deuxième conduite de raccordement (84) lorsque ledit au moins un moteur d'entraînement hydraulique (56, 58) est alimenté en fluide sous pression via la première conduite de raccordement (76), et/ou que le système d'entraînement hydraulique (46) est conçu pour faire fonctionner l'agencement de vanne de décharge (60) afin de décharger du fluide de la première conduite de raccordement (76) lorsque ledit au moins un moteur d'entraînement hydraulique (56, 58) est alimenté en fluide sous pression via la deuxième conduite de raccordement (84).

4. La machine de traitement du sol selon la revendication 2 ou 3,
**caractérisée en ce que** l'agencement de vanne de décharge (60) comprends une vanne de commutation (92) avec un premier élément de raccordement d'entrée (96) relié à la première conduite de raccordement (76), un deuxième élément de raccordement de sortie d'entrée (98) relié à la deuxième conduite de raccordement (84), et un élément de raccordement de sortie (100) relié au réservoir de fluide (62), dans lequel, dans une première position de la vanne de commutation (92), il y a une liaison entre le premier élément de raccordement d'entrée (96) et la deuxième conduite de raccordement (84), et il n'y a pas de liaison entre le deuxième élément de raccordement d'entrée (98) et l'élément de raccordement de sortie (100) et, dans une deuxième position de la vanne de commutation (92), il y a une liaison entre le deuxième élément de raccordement d'entrée (98) et l'élément de raccordement de sortie (100) et il n'y a pas de liaison entre le premier élément de raccordement d'entrée (96) et l'élément de raccordement de sortie (100).

5. La machine de traitement du sol selon la revendication 4,
**caractérisée en ce que** l'élément de raccordement de sortie (100) de la vanne de commutation (92) est relié au réservoir de fluide (62) par une vanne d'arrêt (102), dans lequel, dans une position ouverte de la vanne d'arrêt (102), il y a une liaison entre l'élément de raccordement de sortie (100) et le réservoir de fluide (62) et, dans une position fermée de la vanne d'arrêt (102), il n'y a pas de liaison entre l'élément de raccordement de sortie (100) et le réservoir de fluide (62).

6. La machine de traitement du sol selon l'une des revendications 2 à 5, **caractérisée en ce que** le système d'entraînement hydraulique (46) est conçu pour faire fonctionner l'ensemble de vanne de décharge (60) pour décharger du fluide dans le réservoir de fluide (62) en fonction de la température du fluide dans la première conduite de raccordement (76) lorsque ledit au moins un moteur d'entraînement hydraulique (56, 58) est alimenté en fluide sous pression via la première conduite de raccordement (76) et conçu pour faire fonctionner l'agencement de vanne de décharge (60) pour décharger du fluide dans le réservoir de fluide (62) en fonction de la température du fluide dans la deuxième conduite de raccordement (84) lorsque ledit au moins un moteur d'entraînement hydraulique (56, 58) est alimenté en fluide sous pression via la deuxième conduite de raccordement (84).

7. La machine de traitement du sol selon l'une des revendications 1 à 6, **caractérisée en ce que** le système d'entraînement hydraulique (46) est conçu pour faire fonctionner l'agencement de vanne de décharge (60) afin de décharger du fluide dans le réservoir de fluide (62) lorsque la température du fluide dans une conduite de fuite (108) menant au réservoir de fluide (62) est supérieure à une température seuil prédéterminée du fluide de décharge et/ou se situe dans une plage de température prédéterminée du fluide de décharge.

8. La machine de traitement du sol selon l'une des revendications 1 à 7, **caractérisée en ce que** le système d'entraînement hydraulique (46) est conçu pour faire fonctionner l'agencement de vanne de décharge (60) afin de décharger du fluide dans le réservoir de fluide (62) lorsque la température ambiante est supérieure à une température seuil prédéterminée du fluide de décharge et/ou se situe dans une plage de température prédéterminée du fluide de décharge.

9. La machine de traitement du sol selon l'une des revendications 1 à 8, **caractérisée en ce que** le système d'entraînement hydraulique (46) est conçu pour faire fonctionner l'agencement de vanne de décharge (60) afin de décharger du fluide dans le réservoir de fluide (62) lorsque la viscosité du fluide dans le circuit d'entraînement hydraulique (54) est inférieure à un seuil de viscosité prédéterminé et/ou se situe dans une plage de viscosité prédéterminée.

10. La machine de traitement du sol selon l'une des revendications 1 à 9, **caractérisée en ce que** le système d'entraînement hydraulique (46) est conçu pour faire fonctionner l'agencement de vanne de décharge (60) afin de décharger du fluide dans le réservoir de fluide (62) lorsque le degré de contamination du fluide dans le circuit d'entraînement hydraulique (54) est supérieur à un seuil de décharge de degré de contamination prédéterminé et/ou se situe dans une plage de degré de contamination prédéterminée.

11. La machine de traitement du sol selon l'une des revendications 1 à 10, **caractérisée en ce que** le système d'entraînement hydraulique (46) est conçu pour faire fonctionner l'agencement de vanne de décharge (60) afin de décharger du fluide dans le réservoir de fluide (62) lorsqu'un temps prédéterminé s'est écoulé depuis le dernier démarrage du système d'entraînement hydraulique (46) et/ou lorsqu'un temps prédéterminé s'est écoulé depuis la dernière décharge de fluide du circuit d'entraînement hydraulique (54).

12. La machine de traitement du sol selon l'une des revendications 1 à 11, **caractérisée en ce qu'**un circuit de direction hydraulique (34) est prévu et **en ce que** le circuit de direction hydraulique (34) est conçu pour réapprovisionner en fluide le circuit d'entraînement hydraulique (54).

13. Un procédé de fonctionnement d'une machine de traitement du sol (10), la machine de traitement du sol (10) comprenant un système d'entraînement hydraulique (46), dans lequel le système d'entraînement hydraulique comprend (46) :
- une source de fluide sous pression électrohydraulique (48) avec au moins un moteur électrique (50) et au moins une pompe d'entraînement hydraulique (52),
- un circuit d'entraînement hydraulique (54) alimenté en fluide sous pression par au moins une pompe d'entraînement hydraulique (52),
- au moins un moteur d'entraînement hydraulique (56, 58) alimenté en fluide sous pression par le circuit d'entraînement hydraulique (54),
- un agencement de vanne de décharge (60) pour décharger du fluide du circuit d'entraînement hydraulique (54) dans un réservoir de fluide (62),
- une unité de commande (94) pour commander l'agencement de vanne de décharge (60),
dans lequel l'agencement de vanne de décharge (60) est actionné pour décharger du fluide dans le réservoir de fluide (62) en fonction d'au moins l'un des paramètres suivants :
- une température du fluide dans le circuit d'entraînement hydraulique (54),
- une température du fluide dans un retour de fluide vers le réservoir de fluide (62),
- une température ambiante,
- une viscosité du fluide dans le circuit d'entraînement hydraulique (54),
- un degré de contamination du fluide dans le circuit d'entraînement hydraulique (54),
- une période de temps depuis le dernier démarrage du système d'entraînement hydraulique (46),
- une période de temps depuis la dernière décharge de fluide du circuit
d'entraînement hydraulique (54),
dans lequel l'agencement de vanne de décharge (60) est actionné pour décharger du fluide dans le réservoir de fluide (62) lorsque la température du fluide dans le circuit d'entraînement hydraulique (54) est supérieure à une température seuil prédéterminée du fluide de décharge ou se situe dans une plage de température prédéterminée du fluide de décharge,
selon ce procédé, lorsque l'agencement de vanne de décharge (60) est actionnée pour décharger du fluide du circuit d'entraînement hydraulique (54) vers le réservoir de fluide (62), la quantité de fluide déchargé dans le réservoir de fluide (62) et/ou la vitesse de décharge du fluide est ajustée en fonction d'au moins un des paramètres suivants :
- la température ambiante,
- le degré de contamination,
- le temps écoulé depuis le dernier démarrage du système d'entraînement hydraulique (46),
- le temps écoulé depuis la dernière décharge de fluide du circuit d'entraînement hydraulique (54).
